# EUROPÄISCHE PATENTSCHRIFT

(11) **EP 0 971 154 B1**
(45) Veröffentlichungstag und Bekanntmachung des Hinweises auf die Patenterteilung: **01.06.2005**
(21) Anmeldenummer: 99113006.3
(22) Anmeldetag: 06.07.1999
(51) Int. Cl.: F16F 15/134, F16F 15/123

(54) **Verfahren zur Dämpfung von Torsionsschwingungen sowie Torsionsschwingungsdämpfer**
Method for damping torsional vibrations and torsional vibration damper
Procédé d'amortissement de vibrations de torsion et amortisseur de vibrations torsionelles

(30) Priorität: 08.07.1998 DE 19830432
(43) Veröffentlichungstag der Anmeldung: 12.01.2000
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Rohs, Hans, cand.-Ing., 52351 Düren (DE); Heidingsfeld, Dietmar, Dipl.-Ing., 52078 Aachen (DE)
(74) Vertreter: Castell, Klaus, Dr.

(56) Entgegenhaltungen:
- EP-A- 0 777 059
- DE-C- 19 712 886
- FR-A- 2 495 256
- GB-A- 2 159 241
- GB-A- 2 241 560
- US-A- 4 467 905
- US-A- 5 064 042
- US-A- 5 065 642

## Beschreibung

Die Erfindung betrifft einerseits ein Verfahren zur Dämpfung von Torsionsschwingungen, bei dem zwei zueinander drehbewegliche Baugruppen über wenigstens ein Koppelglied miteinander gehoppelt sind. Andererseits betrifft die Erfindung ein Verfahren zur Dämpfung von Torsionsschwingungen, bei dem zwei zueinander drehbewegliche Baugruppen über wenigstens ein Koppelglied miteinander gekoppelt sind, welches einer Relativbewegung der beiden Baugruppen entgegenwirkt. Ebenso betrifft die Erfindung einen entsprechenden Torsionsschwingungsdämpfer.

Ein derartiges Verfahren sowie ein derartiger Torsionsschwingungsdämpfer sind zum Beispiel aus der EP 0 777 059 A2 bekannt. In dieser Schrift wird ein Torsionsschwingungsdämpfer, bestehend aus einer umlaufenden Antriebsscheibe und einer hierzu koaxialen, gleichsinnig umlaufenden Abtriebsscheibe mit Mitteln zur elastischen Kraftübertragung offenbart. Um einen derartigen Torsionsschwingungsdämpfer einfach und preiswert auszugestalten und eine Schwingungsentkopplung auf allen Lastbereichen eines Antriebes, einschließlich des Leerlaufbereiches, zu ermöglichen, soll die Antriebsscheibe die Abtriebsscheibe teilweise übergreifen und an der Innenseite des übergreifenden Teiles über den Umfang verteilte, radiale Taschen aufweisen, die zu ihren Enden leicht keilförmig ausgebildet sind. Die Abtriebsscheibe ihrerseits weist eine im Querschnitt polygonale Mantelfläche auf. In den Taschen sind jeweils Paare keilförmiger Schubkolben angeordnet, die gegeneinander durch mindestens eine Druckfeder ausgehalten sind, wobei die Schubkolben an ihren der Mantelfläche der Abtriebsscheibe zugewandten Seiten eben oder leicht gewölbt ausgebildet sind. Werden die beiden zueinander drehbeweglichen Baugruppen um einen Relativwinkel gedreht, so wird die Druckfeder als elastisches Element in Abhängigkeit von dem Relativwinkel zwischen den beiden drehbeweglichen Baugruppen in ihrer Länge verändert. Hierdurch wirkt die koppelnde Anordnung aus Schubkolben und Druckfeder einer Relativbewegung der beiden drehbeweglichen Baugruppen entgegen.

Es ist Aufgabe vorliegender Erfindung, bei gattungsgemäßen Dämpfungsverfahren bzw. bei einem gattungsgemäßen Torsionsschwingungsdämpfer eine größere Bandbreite in der Anpassung des Dämpfungsverhaltens zu ermöglichen.

Als Lösung werden primär die Verfahren nach den Ansprüchen 1 und 3 sowie der Torsionsschwingungsdämpfer nach Anspruch 11 vorgeschlagen. Diese Lösungen so wie weitere, ergänzende Lösungen, die jedoch lediglich in den Unteransprüchen beansprucht sind, werden nachstehend detailliert erläutert.

Durch die Variation des Längenänderungsgrades bzw. Kompressionsgrades in Abhängigkeit von dem Relativwinkel ist das Dämpfungsverhalten, wenn Torsionsschwingungen nach dem erfindungsgemäßen Verfahren gedämpft werden, vorteilhafterweise nicht mehr ausschließlich durch die elastischen Eigenschaften des elastischen Elementes geprägt. Vielmehr kann durch eine Anpassung der Variation des Längenänderungsgrades bzw. Kompressionsgrades das Dämpfungsverhalten trotz vorgegebenen elastischen Elementen angepaßt werden. Ein derartiges Verfahren eignet sich insbesondere für den Fall, daß als elastisches Element Federn bzw. federähnliche Anordnungen Verwendung finden.

Vorteilhafterweise wird der Längenänderungsgrad bzw. Kopressionsgrad bei niedrigem, von einer Ruhelage ausgehendem Relativwinkel niedrig, vorzugsweise annäherungsweise gleich Null, gewählt. Auf diese Weise erfährt das elastische Element bei niedrigem Relativwinkel nur eine geringe Längenänderung bzw. Kompression, so daß eine niedrige Torsionssteifigkeit vorliegt, wie dieses insbesondere im Leerlauf von Kraftfahrzeugen gewünscht ist.

Desweiteren kann der Längenänderungsgrad bzw. Kompressionsgrad mit ansteigendem Relativwinkel ansteigen. Hierdurch wird quasi eine mit dem Relativwinkel ansteigende Federkonstante des elastischen Elementes simuliert, so daß das elastische Element bei höheren Relativwinkeln "härter" reagiert als bei niedrigen Relativwinkeln.

Desweiteren umfasst das erfindungsgemäße Verfahren zur Dämpfung von Torsionsschwingungen die Merkmale, dass zwei zueinander drehbewegliche Baugruppen über wenigstens ein Koppelglied miteinander gekoppelt sind, welches einer Relativbewegung der beiden drehbeweglichen Baugruppen entgegenwirkt, wobei wenigstens ein Schubkolben des Koppelgliedes in Abhängigkeit von einem Relativwinkel zwischen den beiden Baugruppen relativ zu einer ersten der beiden Baugruppen verlagert wird, während er mit einer Rückstellkraft auf die erste Baugruppe wirkt.

Ebenso umfasst ein erfindungsgemässer Torsionsschwingungsdämpfer die Merkmale, dass zwei zueinander drehbewegliche Baugruppen über wenigstens ein Koppelglied miteinander gekoppelt sind, welches einer Relativbewegung der beiden Baugruppen entgegenwirkt, wobei das Koppelglied wenigstens einen Schubkolben umfaßt, welcher derart geführt ist, daß er, während er mit einer Rückstellkraft auf eine erste Baugruppe wirkt, in Abhängigkeit von einem Relativwinkel zwischen den beiden Baugruppen relativ zu der ersten Baugruppe verlagert wird.

Bei der Kopplung der beiden zueinander drehbeweglichen Baugruppen, die nach dem Stand der Technik durch einen Relativwinkel zwischen den beiden Baugruppen geprägt ist, wird somit erfindungsgemäß diesem Relativwinkel noch die Verlagerung des Schubkolbens überlagert. Das Dämpfungsverhalten wird somit erfindungsgemäß sowohl durch den Relativwinkel zwischen den beiden Baugruppen als auch durch die Verlagerung des Schubkolbens bezüglich der ersten Baugruppe geprägt. Auf diese Weise wird es möglich, durch ein Anpassen der Verlagerung des Schubkolbens hinsichtlich der ersten Baugruppe, das Dämpfüngsverhalten wesentlich genauer zu beeinflussen, als dieses bei bekannten Verfahren bzw. Vorrichtungen der Fall ist. Die Verlagerung des Schubkolbens bezüglich der ersten Baugruppe in Abhängigkeit von dem Relativwinkel zwischen den beiden zueinander drehbeweglichen Baugruppen entspricht einer Übersetzung der Bewegung der ersten Baugruppe in die Bewegung des Schubkolbens. Je nach tatsächlich bei einem bestimmten Relativwinkel auftretender Verlagerung bestimmt sich dann die Übersetzung.

Als Schubkolben kann jedes beliebige Element eines Torsionsschwingungsdämpfers, welches Teil einer Kopplung zwischen zwei zueinander drehbeweglichen Baugruppen ist und in Abhängigkeit von einem Relativwinkel verlagert werden kann, Anwendung finden. Der erfindungsgemäße Vorteil zeigt sich jedoch insbesondere, wenn die Verlagerung des Schubkolbens zur Variation eines Längenänderungsgrades eines elastischen Elementes, insbesondere eines Federelementes, genutzt wird.

Die erfindungsgemäßen Vorteile lassen sich desweiteren nutzen, wenn der Schubkolben reibend zur Dämpfung beiträgt. Durch seine Verlagerung hinsichtlich der ersten Baugruppe kann eine Reibungskraft zwischen dem Schubkolben und übrigen Baugruppen des Torsionsschwingungsdämpfers in gewünschter Weise beeinflußt werden.

Zum einen kann der Schubkolben in einem bestimmten Relativwinkelbereich in Abhängigkeit von dem Relativwinkel bezüglich der zweiten Baugruppe verkippt werden. Hierzu kann der Schubkolben hinsichtlich seiner Führung zumindest eine Ruheposition und eine Verschiebeposition aufweisen, wobei er in seiner Ruheposition an einer Anlage der zweiten Baugruppe anliegt und seine Verschiebeposition gegenüber der Ruheposition verkippt ist. Während dieser Kippbewegung wird die Bewegung der ersten Baugruppe in eine Bewegung des Schubkolbens umgesetzt. Hierdurch kann die erste Baugruppe freier drehen, da der Schubkolben des Koppelgliedes bei der Verkippbewegung im wesentlichen an seinem Ort verbleibt. Dadurch daß das Koppelglied weiterhin einer Relativbewegung der beiden Baugruppen entgegenwirkt, wird auch bei sehr geringen Relativwinkeln zwischen den beiden Baugruppen ein Rückstellmoment durch das Koppelglied bzw. durch den Schubkolben übertragen. Bei der Verkippbewegung treten jedoch nur sehr niedrige Reibungsverluste auf, so daß beim Übergang zwischen Ruheposition und Verschiebeposition so gut wie keine Reibungskraft ausgeübt wird. Hierdurch wird eine sehr gute Entkopplung bei niedrigen Lasten, insbesondere beim Leerlauf eines Kraftfahrzeuges, gewährleistet.

Eine einfache Ausgestaltung der Erfindung realisiert sich, wenn der Schubkolben zumindest in einem bestimmten Relativwinkelbereich in Abhängigkeit von dem Relativwinkel entlang der ersten Baugruppe verschoben wird. Dieses erfolgt vorteilhafterweise entlang einer Mantelfläche der ersten Baugruppe. Diese Mantelfläche kann im wesentlichen in Umfangsrichtung ausgerichtet sein. Vorteilhafterweise erfolgt die Verschiebebewegung entlang einer planaren Oberfläche der ersten Baugruppe. Bei mehreren Koppelgliedern können derartige planare Oberflächen durch eine polygonale Mantelfläche der ersten Baugruppe realisiert werden.

Eine derartige Verschiebebewegung gewährleistet einerseits auf baulich einfache Weise eine Verlagerung des Schubkolbens bezüglich der ersten Baugruppe. Desweiteren ermöglicht diese Verschiebebewegung auch eine Kontrolle des Reibungsverhaltens des Schubkolben in seiner Führung, in dem ein Oberflächenwinkel zwischen dem Schubkolben und seiner Führung in gewünschter Weise beeinflußt werden kann. Eine derartige Beeinflussung des Oberflächenwinkels ist insbesondere möglich, wenn die Verschiebebewegung entlang einer planaren Oberfläche der ersten Baugruppe folgt, da lediglich durch eine geeignete Gegenführung, wie zum Beispiel eine Führungsfläche der zweiten Baugruppe, ein entsprechender Winkel bereitgestellt werden muß.

Aufgrund der hohen Drehgeschwindigkeiten sowie weiterer Beanspruchungen, die insbesondere auch in axiale Richtung des Torsionsschwingungsdämpfers wirken können, kann es vorkommen, daß ein zwischen zwei Schubkolben des Koppelgliedes vorgesehenes elastisches Element an eine der beiden zueinander drehbeweglichen Baugruppen anschlägt. Um dieses zu vermeiden, können die Schubkolben bei einem bestimmten Relativwinkel überlappen, wenn die beiden Schubkolben bei einer bestimmten Relativbewegung der beiden Baugruppen aufeinanderzu bewegt werden.

Hierbei bezeichnet der Begriff "Überlappen" eine Situation, bei welcher Teile der Schubkolben dieselbe Winkellage bezüglich der Hauptdrehachse des Torsionsschwingungsdämpfers aufweisen. Durch ein derartiges Überlappen kann in vorteilhafter Weise die Führungslänge der Schubkolben für das elastische Element bzw. ein zwischen den Schubkolben angeordnetes Federelement verlängert werden, so daß die Gefahr eines Anschlagens reduziert werden kann.

In diesem Zusammenhang bezeichnet der Begriff "bestimmt", daß auch andere Zustände, wie Relativbewegungen und Relativwinkel, möglich sind und lediglich wenigstens einer dieser Zustände der oben gegebenen Definition entsprechen soll.

Eine Verlängerung der Führung kann dadurch gewährleistet werden, daß beide Schubkolben eine seitliche Haltefläche für das zwischen den Schubkolben angeordnete Federelement aufweisen, die jeweils in eine entsprechende Ausnehmung des jeweils anderen Schubkolbens eingreifen kann. Ebenso können beide Schubkolben eine außenliegende Haltefläche für das zwischen den Schubkolben angeordnete Federelement aufweisen, an deren axial außenliegenden Bereich eine Auflaufschräge vorgesehen ist. Die Ausnehmung bzw. die Auflaufschräge ermöglichen eine Überlappen der beiden Schubkolben, so daß insgesamt eine wesentlich größere Haltefläche gewährleistet ist.

Die vorbeschriebenen Merkmale, insbesondere das Überlappen der beiden Schubkolben, ermöglichen darüber hinaus wesentlich größere Drehwinkel des Torsionsschwingungsdämpfers bevor die beiden Schubkolben aneinander schlagen.

In axialer Richtung neben der Auflaufschräge kann eine Führungsfläche zur Anlage an einer der drehbeweglichen Baugruppen vorgesehen sein. Durch diese Führungsfläche kann gewährleistet werden, daß trotz eines Ineinandergreifen der Schubkolben jeder Schubkolben ausreichend zwischen den beiden drehbeweglichen Baugruppen geführt ist.

Ein Ineinandergreifen der beiden Schubkolben bzw. ein Überlappen der beiden Schubkolben kann beispielsweise dadurch realisiert werden, daß die beiden Schubkolben zumindest bezüglich einer der beiden drehbeweglichen Baugruppen zumindest eine Aufnahmeposition und eine Eintauchposition aufweisen. Hierbei bezeichnet der Begriff "Aufnahmeposition" eine Position eines Schubkolbens, in welcher der andere Schubkolben in diesen eintauchen kann. Dementsprechend bezeichnet der Begriff "Eintauchposition" eine Position des Schubkolbens, in welcher er in den gegenüberliegenden, in einer Aufnahmeposition befindlichen Schubkolben eintauchen kann.

Beispielsweise kann die Aufnahmeposition im wesentlichen der vorbeschriebenen Ruheposition entsprechen, während ein Schubkolben in seiner Verschiebeposition beim Gegeneinanderdrehen der beiden drehbeweglichen Baugruppen auch die Eintauchposition durchlaufen kann.

Insbesondere kann ein jeweiliger Schubkolben in seiner Eintauchposition bezüglich des anderen Schubkolbens radial nach innen verkippt sein. Vorzugsweise taucht in der Eintauchposition die Auflaufschräge des einen Schubkolbens unter der Auflaufschräge des zweiten Schubkolbens hindurch.

Eine sichere Führung der Schubkolben in ihrer Eintauchposition kann dadurch gewährleistet werden, daß diese in ihrer Eintauchposition durch beide drehbeweglichen Baugruppen zwangsgeführt sind.

Andererseits können Mittel vorgesehen sein, die einen der Schubkolben in seiner Aufnahmeposition fixieren, wenn der zweite Schubkolben seine Eintauchposition einnimmt. Dieses können beispielsweise die Federelemente des Koppelgliedes selbst sein. Andererseits können Begrenzungsmittel vorgesehen sein, die zumindest bei beginnendem Eintauchen eines der beiden Schubkolben in den zweiten der beiden Schubkolben einen Anschlag bilden, der ein Verlassen der Aufnahmeposition des zweiten der beiden Schubkolben verhindert. Vorzugsweise läßt der Anschlag dem zweiten der beiden Schubkolben ein gewisses Spiel, so daß durch diesen Anschlag im wesentlichen die freie Bewegung des Torsionsschwingungsdämpfers nicht gehindert wird. Andererseits verhindert der Anschlag wirkungsvoll, daß die beiden Schubkolben zu früh aneinander schlagen.

Die Baukosten für einen erfindungsgemäßen Torsionsschwingungsdämpfer lassen sich reduzieren, wenn das Koppelglied zwei im wesentlichen identische, einander gegenüberliegend angeordnete Schubkolben umfaßt. Dieses gilt insbesondere auch für die erfindungsgemäßen Schubkolben, die einander überlappen können.

Dieses läßt sich insbesondere dadurch gewährleisten, daß die Schubkolben insich hinsichtlich einer radialen Ebene des Torsionsschwingungsdämpfers asymmetrisch ausgestaltet sind. Hierbei kann die Asymmetrie derart gewählt werden, daß zwei Schubkolben einander gegenüberliegend, ineinandergreifend angeordnet werden können.

Es versteht sich, daß ein Torsionsschwingungsdämpfer mit Schubkolben, die einander überlappen können, auch unabhängig von den übrigen Merkmalen des Torsionsschwingungsdämpfers vorteilhaft ist. Selbiges gilt für jede in diesem Zusammenhang genannte Merkmalskombination bzw. für jedes in diesem Zusammenhang genannte Merkmal.

Weitere Vorteile, Ziele und Eigenschaften vorliegender Erfindung werden in nachfolgender Beschreibung anliegender Zeichnung erläutert, in welcher beispielhaft ein erfindungsgemäßer Torsionsschwingungsdämpfer sowie erfindungsgemäße Dämpfungsverfahren dargestellt sind. In der Zeichnung zeigen:
- Figur 1: einen Torsionsschwingungsdämpfer im Schnitt;
- Figur 2: eine schematische Darstellung einer Relativbewegung zwischen zwei Baugruppen des Torsionsschwingungsdämpfers nach Figur 1;
- Figur 3: den Bewegungsablauf nach Figur 2 in überlagerter Darstellung;
- Figur 4: die Übersetzung zwischen erster Baugruppe und Schubkolben in Abhängigkeit von Relativwinkel;
- Figur 5: eine perspektivische Ansicht eines bevorzugten Schubkolbens und
- Figuren 6 bis 10: eine schematische Darstellung einer Relativbewegung zwischen zwei Baugruppen des Torsionsschwingungsdämpfers mit den Schubkolben nach Figur 5.

Der in den Figuren dargestellte Torsionsschwingungsdämpfer weist zwei zueinander drehbewegliche Baugruppen 1 und 2 auf, die über sechs Koppelglieder 3 miteinander gekoppelt sind. Jedes der Koppelglieder 3 umfaßt Federelemente 31, welche Schubkolben 30 jeweils gegen eine Anlage 20 der zweiten Baugruppe drücken (sämtlich mehrfach auftretende Baugruppen sind den in Figuren nur exemplarisch beziffert).

Die Anlagen 20 sind jeweils Teil einer Führung für den Schubkolben 30, die durch eine Führungsfläche 21 der zweiten Baugruppe 2 und eine im Wesentlichen plane Führungsfläche 11 der ersten Baugruppe 1 gebildet ist.

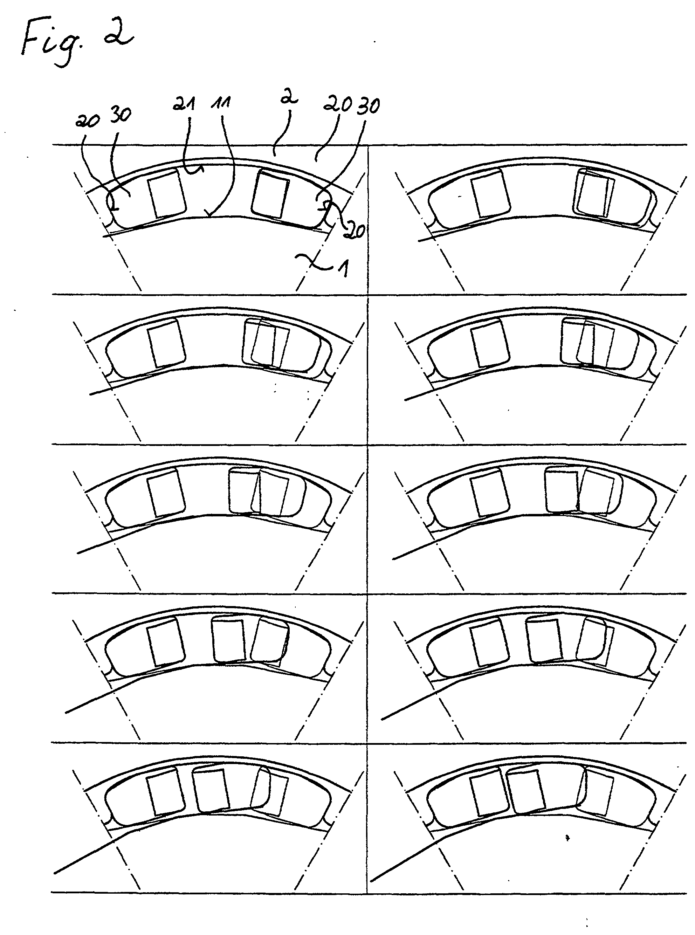

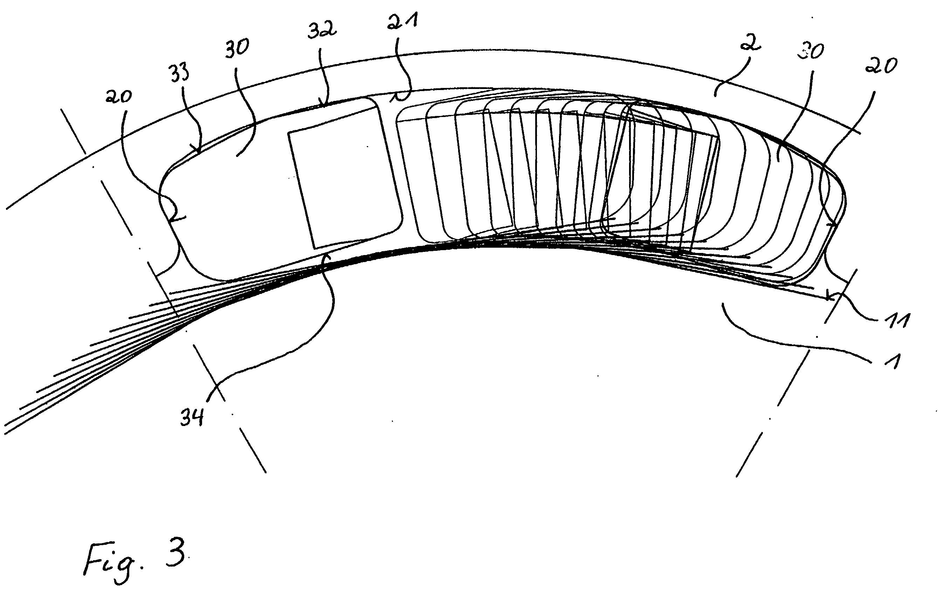

Die durch die Führung bedingte Bewegung des Schubkolbens 30 in Abhängigkeit von einem Relativwinkel zwischen den beiden Baugruppen 1 und 2 ist aus den Figuren 2 und 3 ersichtlich. Bei einer Relativdrehung zwischen den beiden Baugruppen 1 und 2 verlagert sich einer der beiden Schubkolben 30 eines jeden Koppelgliedes 3, wobei der sich verlagernde Schubkolben 30 währenddessen mit einer Rückstellkraft auf die erste Baugruppe 1 wirkt. Der andere Schubkolben 30 verbleibt indessen an der Anlage 20 der zweiten Baugruppe. Die Relativbewegung zwischen den beiden Baugruppen 1 und 2 führt nicht nur zu einer Verlagerung des Schubkolben 30 bezüglich der zweiten Baugruppe sondern auch, wie aus den Figuren 2 und 3 ersichtlich, zu einer Relativbewegung zwischen dem Schubkolben 30 und der ersten Baugruppe 1. Hierbei führt der Schubkolben 30 einerseits eine Verkippbewegung aus einer Ruheposition in eine Verschiebeposition aus und wird andererseits entlang der Führungsfläche 11 der ersten Baugruppe 1 verschoben.

In der Ruheposition (siehe beispielsweise linker Schubkolben in Figur 3) liegt der Schubkolben 30 einerseits an der Anlage 20 und andererseits mit einer ersten Schubkolbenführungsfläche 32 an der Führungsfläche 21 der zweiten Baugruppe an, während er die erste Baugruppe 1 nur leicht an deren Führungsfläche 11 berührt. In der Verschiebeposition andererseits liegt der Schubkolben mit einer zweiten Führungsfläche 33 an der Führungsfläche 21 der zweiten Baugruppe an, während er mit seiner Unterseite 34 an der Führungsfläche 11 der ersten Baugruppe anliegt. Die Führungsflächen 33 und 34 des Schubkolbens 30 sind keilförmig gegeneinander ausgerichtet.

Werden nun die beiden Baugruppen 1 und 2 gegeneinander bewegt, so drückt die erste Baugruppe 1 mit ihrer Führungsfläche 11 einen der beiden Schubkolben 30 jedes Koppelgliedes 3 aus dessen Ruheposition in die Verschiebeposition. Bei dieser Kippbewegung gleitet die erste Baugruppe 1 unter dem Schubkolben her. Gleichwohl findet eine leichte Längenänderung bzw. Kompression des Federelementes 31 statt, so daß der Schubkolben 30 eine Rückstellkraft auf die erste Baugruppe ausübt. Die bei dieser Kippbewegung auftretenden Reibungskräfte sind jedoch äußerst gering, so daß in vorliegendem Zusammenhang bei dieser Kippbewegung von einer nahezu nicht vorhandenen Reibung gesprochen werden kann.

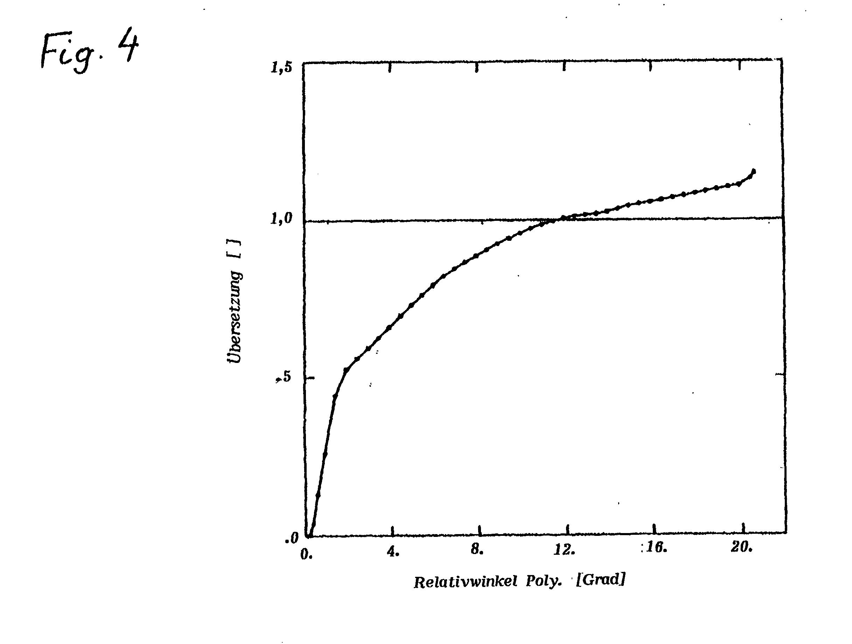

Dadurch, daß die erste Baugruppe 1 unter dem Schubkolben 30 hindurch gleitet, folgt darüber hinaus eine Übersetzung zwischen der Drehbewegung des Kolbes 30 um eine Hauptdrehachse des Torsionsschwingsdämpfers und der Drehbewegung der ersten Baugruppe 1 um diese Hauptdrehachse, die nahezu gleich Null ist (siehe Figur 4).

Bei etwas größeren Relativwinkeln kommen die Führungsflächen 33 und 34 des Schubkolbens 30 an den entsprechenden Führungsflächen 21 der zweiten Baugruppe 2 und 11 der ersten Baugruppe 1 zur Anlage. Hierbei ist die Führungsfläche 21 derart ausgestaltet, daß der Schubkolben 30 zunächst langsamer dreht als die erste Baugruppe 1, so daß der Schubkolben 30 relativ zur ersten Baugruppe 1 von dem Federelement 31 weg bewegt wird. Hieraus folgt eine Übersetzung, die kleiner als 1 ist (siehe Figur 4).

Ab einem Relativwinkel von etwa 12° ist die Führungsfläche 21 der zweiten Baugruppe 2 derart ausgestaltet, daß der Schubkolben 30 schneller als die Baugruppe 1 dreht. Dieses bedeutet, daß sich der Schubkolben 30 hinsichtlich der ersten Baugruppe 1 auf die Federanordnung 31 zubewegt. Aus dieser Relativbewegung des Schubkolbens 30 hinsichtlich der ersten Baugruppe 1 folgt eine Übersetzung, die größer als 1 ist.

Hinsichtlich des Federelementes 31 bedeutet die in Figur 4 dargestellte Übersetzung, daß die Federkonstante bei Übersetzungswerten unter 1 virtuell erniedrigt und bei Federkonstanten über 1 virtuell erhöht wird. Durch geeignete Wahl der Anstellwinkel der Führungsflächen 32, 33 und 34 sowie 11 und 21 kann darüber hinaus das Reibungsverhalten dieser Anordnung beeinflußt werden.

Je nach Erfordernissen, kann diese Anordnung unsymmetrisch ausgestaltet werden, so daß sich die Übersetzung des rechten Schubkolbens 30 und die des linken Schubkolbens 30 unterscheiden. Ebenso ist es möglich, auf einen der Schubkolben 30 jeweils zu verzichten.

Wie unmittelbar ersichtlich, wird durch die Relativbewegung des Schubkolbens 30 bezüglich der ersten Baugruppe 1 der Längenänderungsgrad bzw. der Kompressionsgrad des Federelementes 31 in Abhängigkeit vom Relativwinkel variiert. Bei niedrigen Relativwinkeln ist der Längenänderungsgrad nahezu gleich Null, während er mit ansteigendem Relativwinkel ebenfalls ansteigt.

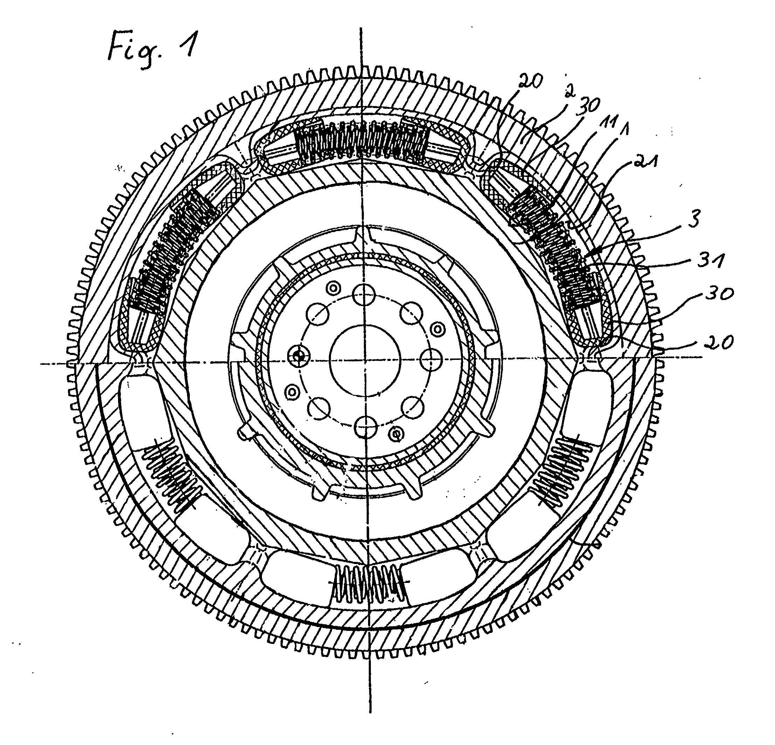

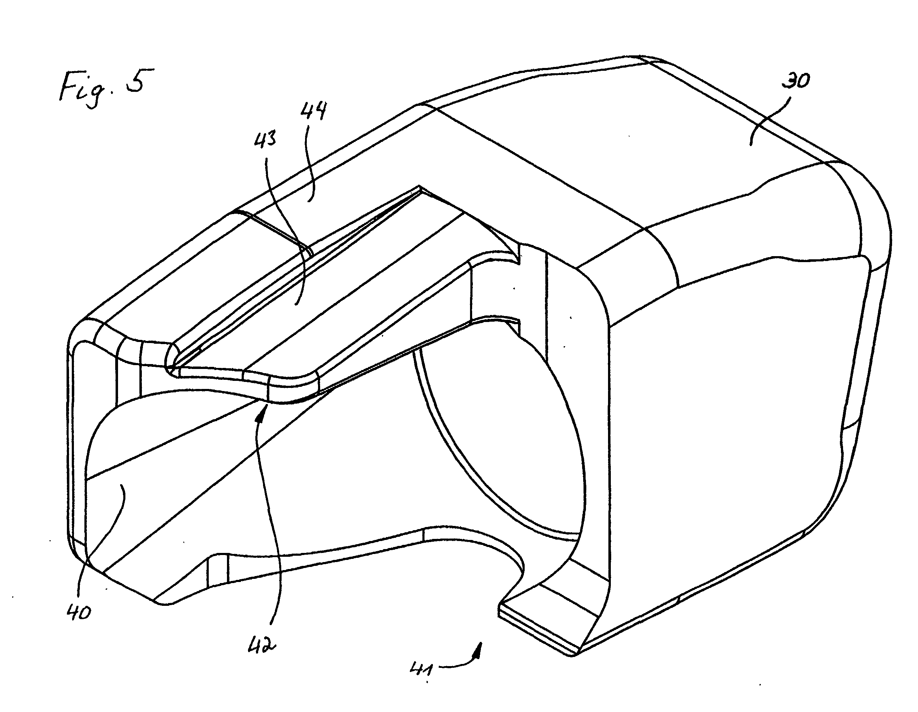

Der in Fig. 5 dargestellte, bevorzugte Schubkolben 30 weist eine seitliche Haltefläche 40 auf, die das entsprechende Federelement 31 nach Fig. 1 führen kann. Ebenso umfaßt der Schubkolben 30 eine außenliegende Haltefläche 42, an deren axial außenliegenden Bereich eine Auflaufschräge 43 vorgesehen ist.

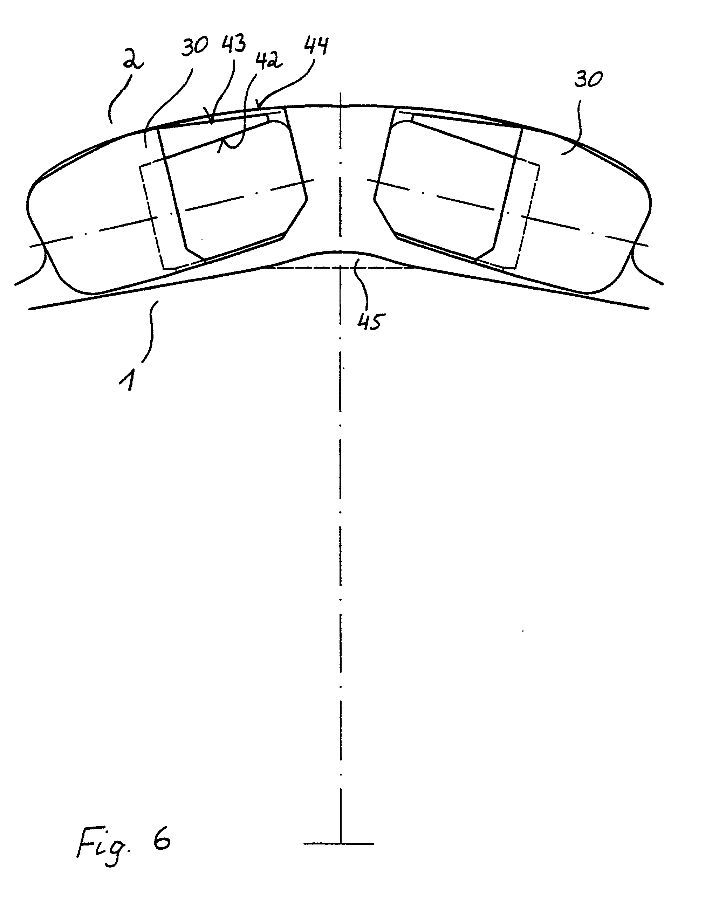

Axial neben der Auflaufschräge 43 ist eine Führungsfläche 44 vorgesehen. Wie aus Fign. 6 bis 10 ersichtlich, kann diese Führungsfläche 44 an der drehbeweglichen Baugruppe 2 anliegen.

Darüber hinaus weist der Schubkolben 30 nach Fig. 5 eine Ausnehmung 41 auf. In diese Ausnehmung kann die seitliche Haltefläche 40 eines gegenüberliegend angeordneten, identischen Schubkolbens 30 eingreifen.

Wie ersichtlich, ist der Schubkolben 30 insich hinsichtlich einer radialen Ebene des Torsionsschwingungsdämpfers asymmetrisch ausgestaltet, wobei diese radiale Ebene beispielsweise in Fign. 6 bis 10 als Zeichenebene genutzt ist. Entsprechend Fig. 1 verläuft diese radiale Ebene durch die Federn 31.

Wie aus Fign. 6 bis 10 ersichtlich, sind die beiden ansich identischen Schubkolben 30 gemäß Fig. 5 einander gegenüberliegend angeordnet und bilden gemeinsam mit einem in Fign. 6 bis 10 nicht dargestellten Federelement das jeweilige Koppelglied. Hierbei liegt, wie unmittelbar ersichtlich, die Haltefläche des einen Schubkolbens 30 unterhalb der Zeichenebene und die Haltefläche 40 des anderen Schubkolbens 30 oberhalb der Zeichenebene.

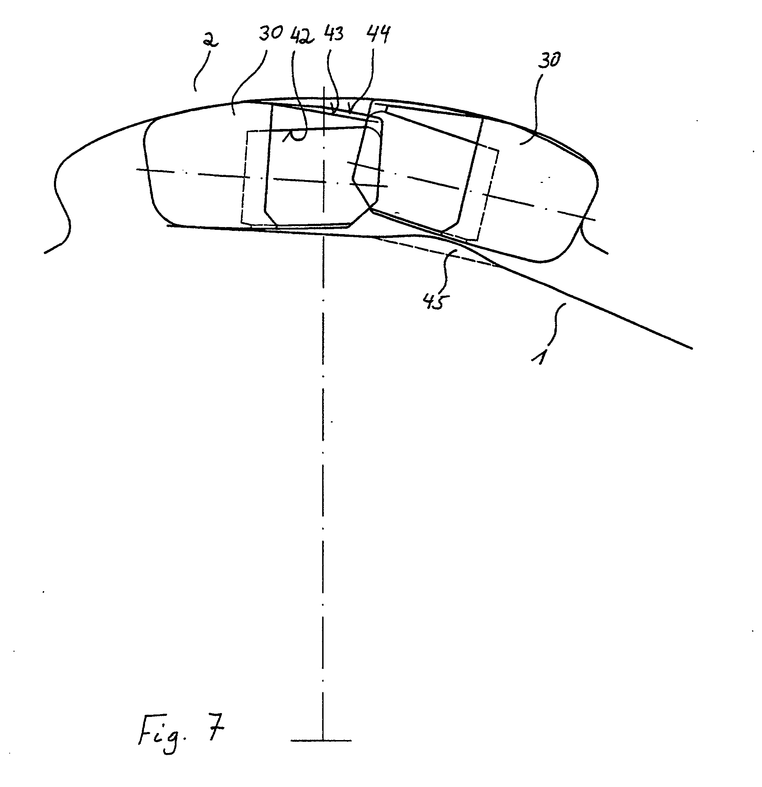

Werden die beiden drehbeweglichen Baugruppen 1, 2 relativ zueinander bewegt, so gelangen, wie bereits vorstehend erläutert und nochmals in Fig. 7 dargestellt, einer der beiden Schubkolben 30 (bei dem in Fign. 6 bis 10 dargestellten Ausführungsbeispiel der linke Schubkolben) in seine Verschiebeposition, während der andere Schubkolben 30 (bei dem in Fign. 6 bis 10 dargestellten Ausführungsbeispiel der rechte Schubkolben) in seiner Ruhelage verbleibt.

Wie insbesondere aus Fign. 7 bis 10 ersichtlich, wird hierbei der linke Schubkolben 30 bezüglich des rechten Schubkolbens 30 radial nach innen verkippt. Gleichzeitig wird durch das Federelement gewährleistet, daß der rechte Schubkolben 30 nach radial außen gekippt wird, soweit dieses bezüglich seiner Ruhelage noch möglich ist. Insofern dient das Federelement 31 als Mittel, das den Schubkolben in seiner Aufnahmeposition fixiert. Von der in Fig. 6 dargestellten Ausgangslage kann dieses durch ein leichtes Liften bzw. durch ein leichtes Kippen nach radial außen gewährleistet werden.

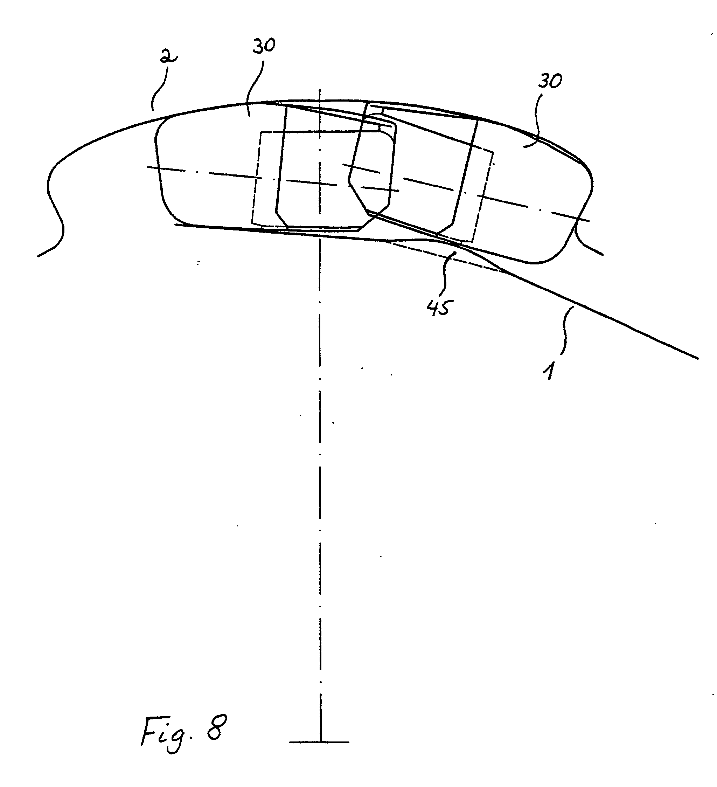

Fig. 8 zeigt den Torsionsschwingungsdämpfer in seiner Position unmittelbar vor dem Eintauchen des einen Schubkolbens 30 in den anderen Schubkolben 30. Wie unmittelbar ersichtlich, kann bei dieser Anordnung die Auflaufschräge 43 des linken Schubkolbens 30 unter die außenliegende Haltefläche 42 des rechten Schubkolbens 30 tauchen. Ebenso ist unmittelbar ersichtlich, daß der linke Schubkolben 30 in seiner Eintauchposition durch beide drehbeweglichen Baugruppen 1, 2 zwangsgeführt ist.

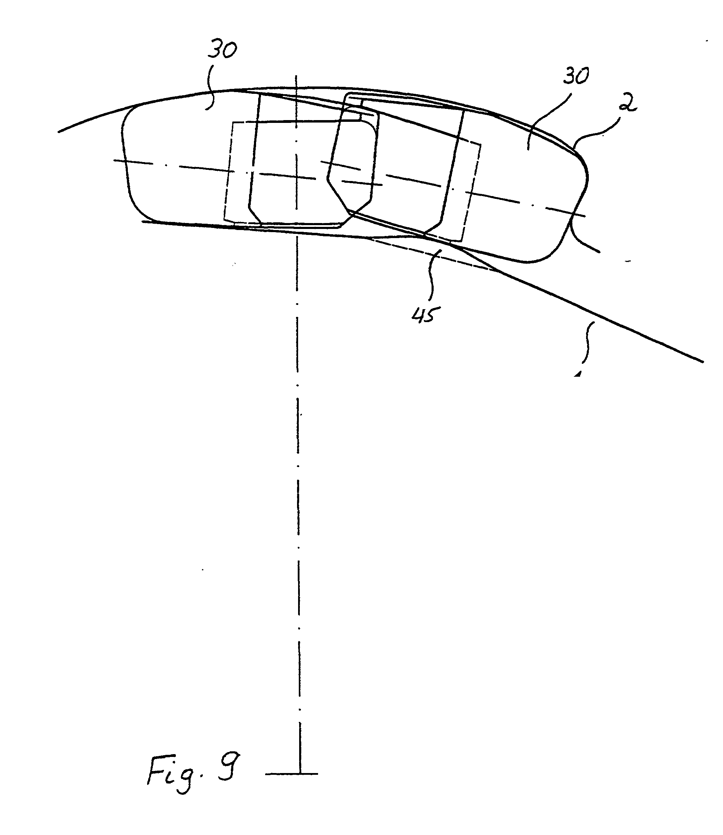

Hingegen weist der rechte Schubkolben 30 bedingt durch das Federelement 31 ein gewisses Spiel auf, wie dieses aus einem Vergleich der Fign. 8 und 9 ersichtlich ist. Dieses Spiel ist zwischen einem Anschlag der Führungsfläche 44 an der zweiten Baugruppe 2 und einem Anschlag des Schubkolbens 30 an einem Fortsatz 45 gewährleistet, wie Fign. 8 und 9 darstellen. Auf diese Weise wird eine Relativbewegung der beiden Baugruppen 1 und 2 zueinander nicht behindert, obwohl vermieden werden kann, daß der rechte Schubkolben 30 seine Aufnahmeposition verläßt und ein Eintauchen des linken Schubkolbens 30 verhindert.

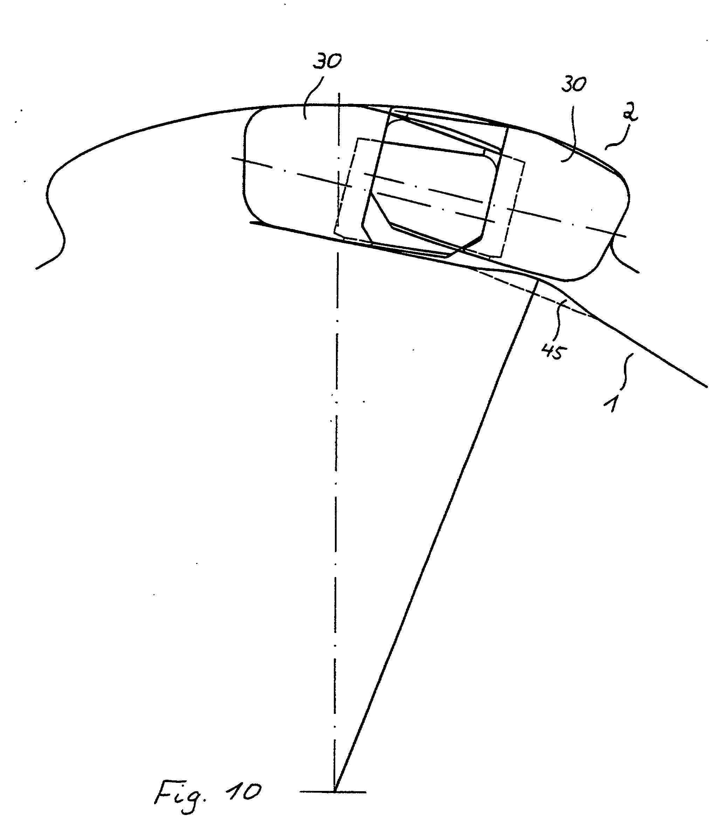

Fig. 10 zeigt die beiden Schubkolben bei Anschlag. Wie unmittelbar ersichtlich, gewährleisten diese Schubkolben bei gleicher Führungslänge für das Federelement 31 einen wesentlich größeren relativen Drehwinkel zwischen den beiden Baugruppen 1, 2 bzw. bei gleichem maximalen Drehwinkel eine wesentlich größere Führung des Federelementes 31. Dieses gilt insbesondere, bedingt durch die Auflaufschräge 43, für die radial außenliegende Führung. Darüber hinaus gewährleisten die seitlichen Führungsflächen 44 auch eine wesentlich sicherere und stabilere Führung der Schubkolben 30. Durch diese Anordnung läßt sich insbesondere bei hohen Drehzahlen ein Anschlagen der Federelemente 31 an der zweiten Baugruppe 2 vermeiden.

## Patentansprüche

1. Verfahren zum Dämpfen von Torsionsschwingungen, bei dem zwei zueinander drehbewegliche Baugruppen (1, 2) über wenigstens ein Koppelglied (3) miteinander gekoppelt sind, welches einer Relativbewegung der beiden drehbeweglichen Baugruppen entgegenwirkt, indem bei einer Relativbewegung zwischen den beiden Baugruppen sich einer von zwei Schubkolben (30) des Koppelgliedes (3) bezüglich der zweiten Baugruppe verlagert während der andere der zwei Schubkolben an einer Anlage (20) der zweiten Baugruppe verbleibt, ***dadurch gekennzeichnet, dass*** wenigstens ein Schubkolben (30) des Koppelglieds (3) in Abhängigkeit von einem Relativwinkel zwischen den beiden Baugruppen (1, 2) relativ zu einer ersten Baugruppe (1) der beiden Baugruppen (1, 2) verlagert und bezüglich der zweiten Baugruppe (2) der beiden Baugruppen (1, 2) verkippt wird, während er mit einer Rückstellkraft auf die erste Baugruppe (1) wirkt.

2. Verfahren nach Anspruch 1, ***dadurch gekennzeichnet, dass*** die Verkippung zwischen einer Ruheposition und einer Verschiebposition erfolgt.

3. Verfahren zum Dämpfen von Torsionsschwingungen, bei dem zwei zueinander drehbewegliche Baugruppen (1, 2) über wenigstens ein Koppelglied (3) miteinander gekoppelt sind, welches einer Relativbewegung der beiden drehbeweglichen Baugruppen entgegenwirkt, indem bei einer Relativbewegung zwischen den beiden Baugruppen sich einer von zwei Schubkolben (30) des Koppelgliedes (3) bezüglich der zweiten Baugruppe verlagert während der andere der zwei Schubkolben an einer Anlage (20) der zweiten Baugruppe verbleibt, ***dadurch gekennzeichnet, dass*** wenigstens ein Schubkolben (30) des Koppelglieds (3) in Abhängigkeit von einem Relativwinkel zwischen den beiden Baugruppen (1, 2) entlang einer ersten Baugruppe (1) der beiden Baugruppen (1, 2) verschoben wird, während er mit einer Rückstellkraft auf die erste Baugruppe (1) wirkt.

4. Verfahren nach Anspruch 3, ***dadurch gekennzeichnet, dass*** die Verschiebebewegung entlang einer planen Oberfläche (11) der ersten Baugruppe (1) erfolgt.

5. Verfahren nach einem der Ansprüche 1 bis 4, ***dadurch gekennzeichnet, dass*** die beiden zueinander drehbeweglichen Baugruppen (1, 2) über wenigstens ein im wesentlichen tangential wirksames elastisches Element (31) des Koppelglieds (3) miteinander dadurch wechselwirken, dass das elastische Element (31) in Abhängigkeit von einem Relativwinkel zwischen den beiden drehbeweglichen Baugruppen (1, 2) in seiner Länge verändert und der Längenänderungsgrad in Abhängigkeit von dem Relativwinkel variiert wird.

6. Verfahren nach Anspruch 5, ***dadurch gekennzeichnet, dass*** der Längenänderungsgrad bei niedrigem, von einer Ruhelager ausgehendem Relativwinkel niedrig, vorzugsweise annäherungsweise gleich 0, ist.

7. Verfahren nach Anspruch 5 oder 6, ***dadurch gekennzeichnet, dass*** der Längenänderungsgrad mit ansteigendem Relativwinkel ansteigt.

8. Verfahren nach einem der Ansprüche 1 bis 7, ***dadurch gekennzeichnet, dass*** die beiden zueinander drehbeweglichen Baugruppen (1, 2) über wenigstens ein elastisches Element (31) des Koppelglieds (3) miteinander dadurch wechselwirken, dass das elastische Element (31) in Abhängigkeit von einem Relativwinkel zwischen den beiden drehbeweglichen Baugruppen (1, 2) komprimiert und der Kompressionsgrad in Abhängigkeit von dem Relativwinkel variiert wird.

9. Verfahren nach Anspruch 8, ***dadurch gekennzeichnet, dass*** der Kompressionsgrad bei niedrigem, von einer Ruhelage ausgehenden Relativwinkel niedrig, vorzugsweise annäherungsweise gleich 0 ist.

10. Verfahren nach Anspruch 9, ***dadurch gekennzeichnet, dass*** der Kompressionsgrad mit ansteigendem Relativwinkel ansteigt.

11. Torsionsschwingungsdämpfer, bei dem zwei zueinander drehbewegliche Baugruppen (1, 2) über wenigstens ein Koppelglied (3) miteinander gekoppelt sind, welches einer Relativbewegung der beiden Baugruppen (1, 2) entgegenwirkt, indem bei einer Relativbewegung zwischen den beiden Baugruppen sich einer von zwei Schubkolben (30) des Koppelgliedes (3) bezüglich der zweiten Baugruppe verlagert während der andere der zwei Schubkolben an einer Anlage (20) der zweiten Baugruppe verbleibt, ***dadurch gekennzeichnet, dass*** wenigstens einer der zwei Schubkolben des Koppelglieds (3), derart geführt ist, dass er, während er mit einer Rückstellkraft auf eine erste Baugruppe (1) der beiden Baugruppen (1, 2) wirkt, in Abhängigkeit von einem Relativwinkel zwischen den beiden Baugruppen (1, 2) relativ zu der ersten Baugruppe (1) verlagert wird, wobei er hinsichtlich seiner Führung zumindest eine Ruheposition und eine Verschiebeposition aufweist und er in seiner Ruheposition an der Anlage (20) der zweiten Baugruppe (2) anliegt und seine Verschiebeposition gegenüber der Ruheposition bezüglich der zweiten Baugruppe (2) verkippt ist.

12. Torsionsschwingungsdämpfer nach Anspruch 11, ***dadurch gekennzeichnet, dass*** das Koppelglied (3) zwei Schubkolben (30) aufweist, die bei einer bestimmten Relativbewegung der beiden Baugruppen aufeinander zu bewegt werden, wobei bei einem bestimmten Relativwinkel die Schubkolben überlappen.

13. Torsionsschwingungsdämpfer nach Anspruch 11 oder 12, ***dadurch gekennzeichnet, dass*** das Koppelglied (3) zwei Schubkolben (30) umfasst und beider Schubkolben (30) eine seitliche Haltefläche (40) für ein zwischen den Schubkolben (30) angeordnetes Federelement (31) aufweisen, die jeweils in eine entsprechende Ausnehmung (41) des jeweils anderen Schubkolbens (30) eingreifen kann.

14. Torsionsschwingungsdämpfer nach einem der Ansprüche 11 bis 13, ***dadurch gekennzeichnet, dass*** das Koppelglied (3) zwei Schubkolben (30) umfasst und beide Schubkolben (30) eine außenliegende Haltefläche (42) für ein zwischen den Schubkolben (30) angeordnetes Federelement (31) aufweisen, an deren axial außenliegenden Bereich eine Auflaufschräge (43) vorgesehen ist.

15. Torsionsschwingungsdämpfer nach Anspruch 14, ***dadurch gekennzeichnet, dass*** axial neben der Auflaufschräge (43) eine Führungsfläche (44) zur Anlage an einer der drehbeweglichen Baugruppen (2) vorgesehen ist.

16. Torsionsschwingungsdämpfer nach einem der Ansprüche 11 bis 15, ***dadurch gekennzeichnet, dass*** das Koppelglied (3) zwei Schubkolben (30) aufweist, die bezüglich einer der beiden drehbeweglichen Baugruppen zumindest eine Aufnahmeposition und eine Eintauchposition aufweisen.

17. Torsionsschwingungsdämpfer nach Anspruch 16, ***dadurch gekennzeichnet, dass*** die Schubkolben (30) in ihrer Eintauchposition bezüglich des anderen Schubkolben (30) radial nach innen verkippt sind.

18. Torsionsschwingungsdämpfer nach Anspruch 16 oder 17, ***dadurch gekennzeichnet, dass*** die Schubkolben (30) in ihrer Eintauchposition durch beide drehbeweglichen Baugruppen (1, 2) zwangsgeführt sind.

19. Torsionsschwingungsdämpfer nach einem der Ansprüche 16 bis 18, ***gekennzeichnet durch*** Mittel, die einen ersten der beiden Schubkolben (30) in seiner Aufnahmeposition fixieren, wenn der zweite der beiden Schubkolben (30) seine Eintauchposition einnimmt.

20. Torsionsschwingungsdämpfer nach Anspruch 19, ***dadurch gekennzeichnet, dass*** die Fixiermittel ein Federelement, vorzugsweise ein Federelement (31) des Koppelgliedes (3), umfassen.

21. Torsionsschwingungsdämpfer nach einem der Ansprüche 16 bis 20, ***gekennzeichnet durch*** Begrenzungsmittel, die zumindest bei beginnendem Eintauchen eines ersten der beiden Schubkolben (30) in den zweiten der beiden Schubkolben (30) einen Anschlag (45) bilden, der ein Verlassen der Aufnahmeposition des zweiten der beiden Schubkolben (30) verhindert.

22. Torsionsschwingungsdämpfer nach einem der Ansprüche 11 bis 21, ***dadurch gekennzeichnet, dass*** das Koppelglied (3) zwei im wesentlichen identische, einander gegenüberliegend angeordnete Schubkolben (30) umfasst.

23. Torsionsschwingungsdämpfer nach einem der Ansprüche 11 bis 22, ***dadurch gekennzeichnet, dass*** die Schubkolben (30) hinsichtlich einer radialen Ebene des Torsionsschwingungsdämpfers asymmetrisch ausgestaltet sind.

## Claims

1. A method of dampening torsional vibrations by which two structural components (1, 2) that are rotatable relative to each other are coupled together by at least one coupling member (3) that counteracts a relative movement of the two rotatable structural components by having one of two pusher pistons (30) of the coupling member (3) shifted with respect to the second structural component when the two structural components are moving relative to each other whilst the other one of the two pusher pistons remains at a contact surface (20) of the second structural component,
***characterized in that,*** depending on a relative angle between the two structural components (1, 2), at least one pusher piston (30) of the coupling member (3) is shifted relative to a first structural component (1) of the two structural components (1, 2) and is tilted with respect to the second structural component (2) of the two structural components (1, 2) while acting with a restoring force onto the first structural component (1).

2. The method as set forth in claim 1, ***characterized in that*** tilting occurs between an at rest position and a displaced position.

3. A method of dampening torsional vibrations by which two structural components (1, 2) that are rotatable relative to each other are coupled together by at least one coupling member (3) that counteracts a relative movement of the two rotatable structural components by having one of two pusher pistons (30) of the coupling member (3) shifted with respect to the second structural component when the two structural components are moving relative to each other whilst the other one of the two pusher pistons remains at a contact surface (20) of the second structural component,
***characterized in that,*** depending on a relative angle between the two structural components (1, 2), at least one pusher piston (30) of the coupling member (3) is displaced along a first structural component (1) of the two structural components (1, 2) while acting with a restoring force onto the first structural component (1).

4. The method as set forth in claim 3, ***characterized in that*** displacement occurs along a planar surface (11) of the first structural component (1).

5. The method as set forth in any of the claims 1 through 4, ***characterized in that*** the two structural components (1, 2) that are rotatable relative to each other are caused to interact through at least one elastic element (31) of the coupling member (3) acting in a substantially tangential direction **in that** the length of said elastic element (31) is varied as a function of a relative angle between the two rotatable structural components (1, 2) and **in that** the degree of length variation is varied as a function of the relative angle.

6. The method as set forth in claim 5, ***characterized in that,*** when the relative angle starting from an at rest position is low, the degree of length variation is low, and preferably approximately equals 0.

7. The method as set forth in claim 5 or 6, ***characterized in that*** the degree of length variation increases with the increase of the relative angle.

8. The method as set forth in any of the claims 1 through 7, ***characterized in that*** the two structural components (1, 2) that are rotatable relative to each other are caused to interact through at least one elastic element (31) of the coupling member (3) **in that** the elastic element (31) is compressed as a function of a relative angle between the two rotatable structural components (1, 2) and **in that** the degree of compression is varied as a function of the relative angle.

9. The method as set forth in claim 8, ***characterized in that,*** when the relative angle starting from an at rest position is low, the degree of compression is low, and preferably approximately equals 0.

10. The method as set forth in claim 9, ***characterized in that*** the degree of compression increases with the increase of the relative angle.

11. A torsional vibration damper in which two structural components (1, 2) that are rotatable relative to each other are coupled together by at least one coupling member (3) that counteracts a relative movement of the two structural components (1,2) in that one of two pusher pistons (30) of the coupling member (3) is shifted with respect to the second structural component when the two structural components are moving relative to each other whilst the other one of the two pusher pistons remains at a contact surface (20) of the second structural component,
***characterized in that*** at least one of the two pusher pistons of the coupling member (3) is guided in such a manner that it is shifted relative to the first structural component (1) as a function of a relative angle between the two structural components (1, 2) while acting with a restoring force onto a first structural component (1) of the two structural components (1, 2), said pusher piston having, with regard to its guidance, at least one at rest position and one displaced position and resting against the contact surface (20) of the second structural component (2) when in its at rest position and being tilted with respect to the second structural component (2) when in its displaced position with respect to its at rest position.

12. The torsional vibration damper as set forth in claim 11, ***characterized in that*** the coupling member (3) comprises two pusher pistons (30) that are caused to move toward each other when the two structural components execute a certain relative movement, with the pusher pistons overlapping at a certain relative angle.

13. The torsional vibration damper as set forth in claim 11 or 12, ***characterized in that*** the coupling member (3) includes two pusher pistons (30) and that the two pusher pistons (30) comprise a lateral retaining surface (40) for a spring element (31) disposed between the pusher pistons (30), each of said retaining surfaces being capable of respectively engaging into a corresponding recess (41) provided in the other one of the pusher pistons (30) respectively.

14. The torsional vibration damper as set forth in any of the claims 11 through 13,
***characterized in that*** the coupling member (3) includes two pusher pistons (30) and that the two pusher pistons (30) comprise an external retaining surface (42) for a spring element (31) disposed between the pusher pistons (30), an inclined stop surface (43) being provided on the axially outer region of said external retaining surface.

15. The torsional vibration damper as set forth in claim 14, ***characterized in that*** a guiding surface (44) that is intended to come to rest against one of the rotatable structural components (2) is provided axially beside the inclined stop surface (43).

16. The torsional vibration damper as set forth in any of the claims 11 through 15,
***characterized in that*** the coupling member (3) comprises two pusher pistons (30) that comprise at least one receiving position and one retracted position with respect to one of the two rotatable structural components.

17. The torsional vibration damper as set forth in claim 16, ***characterized in that*** the pusher pistons (30), when in their retracted position, are tilted radially inward with respect to the other pusher piston (30).

18. The torsional vibration damper as set forth in claim 16 or 17, ***characterized in that*** the pusher pistons (30), when in their retracted position, are constrained and guided by the two rotatable structural components (1, 2).

19. The torsional vibration damper as set forth in any of the claims 16 through 18,
***characterized by*** means that fix the receiving position of a first one of the two pusher pistons (30) when the second one of the two pusher pistons (30) adopts its retracted position.

20. The torsional vibration damper as set forth in claim 19, ***characterized in that*** the fixation means include a spring element, preferably a spring element (31) of the coupling member (3).

21. The torsional vibration damper as set forth in any of the claims 16 through 20,
***characterized by*** limiting means that form an abutment (45) in the second one of the two pusher pistons (30) at least when a first one of the two pusher pistons (30) starts to retract, said abutment preventing the second of the two pusher pistons (30) from leaving its receiving position.

22. The torsional vibration damper as set forth in any of the claims 11 through 21,
***characterized in that*** the coupling means (3) includes two substantially identical pusher pistons (30) that are disposed so as to face each other.

23. The torsional vibration damper as set forth in any of the claims 11 through 22,
***characterized in that*** the pusher pistons (30) are configured asymmetrically with regard to a radial plane of the torsional vibration damper.

## Revendications

1. Procédé pour amortir les vibrations de torsion selon lequel deux sous-ensembles (1, 2) montés mobiles en rotation l'un par rapport à l'autre sont réunis par couplage par l'intermédiaire d'au moins un organe de couplage (3) qui s'oppose à un mouvement relatif entre les deux sous-ensembles mobiles en rotation par le fait que lors d'un mouvement relatif entre les deux sous-ensembles l'un de deux poussoirs (30) de l'organe de couplage (3) se déplace par rapport au deuxième sous-ensemble alors que l'autre des deux poussoirs reste en appui contre une surface d'appui (20) du deuxième sous-ensemble, ***caractérisé en ce qu'***au moins un poussoir (30) de l'organe de couplage (3) se déplace par rapport à un premier sous-ensemble (1) des deux sous-ensembles (1,2) en fonction d'un angle relatif entre les deux sous-ensembles (1, 2) et est basculé par rapport au deuxième sous-ensemble (2) des deux sous-ensembles (1, 2) tandis qu'il agit sur le premier sous-ensemble (1) avec une force de rappel.

2. Procédé selon la revendication 1, ***caractérisé en ce que*** le basculement s'effectue entre une position de repos et une position de translation.

3. Procédé pour amortir les vibrations de torsion selon lequel deux sous-ensembles (1, 2) montés mobiles en rotation l'un par rapport à l'autre sont réunis par couplage par l'intermédiaire d'au moins un organe de couplage (3) qui s'oppose à un mouvement relatif entre les deux sous-ensembles mobiles en rotation par le fait que lors d'un mouvement relatif entre les deux sous-ensembles l'un de deux poussoirs (30) de l'organe de couplage (3) se déplace par rapport au deuxième sous-ensemble alors que l'autre des deux poussoirs reste en appui contre une surface d'appui (20) du deuxième sous-ensemble, ***caractérisé en ce qu'***au moins un poussoir (30) de l'organe de couplage (3) est déplacé en translation le long d'un premier sous-ensemble (1) des deux sous-ensembles (1, 2) en fonction d'un angle relatif entre les deux sous-ensembles (1, 2) tandis qu'il agit sur le premier sous-ensemble (1) avec une force de rappel.

4. Procédé selon la revendication 3, ***caractérisé en ce que*** le mouvement de translation est effectué le long d'une surface (11) plane du premier sous-ensemble (1).

5. Procédé selon l'une quelconque des revendications 1 à 4, ***caractérisé en ce que*** les deux sous-ensembles (1, 2) mobiles en rotation l'un par rapport à l'autre interagissent par l'intermédiaire d'au moins un élément élastique (31) de l'organe de couplage (3) qui agit suivant une direction sensiblement tangentielle du fait que la longueur de l'élément élastique (31) varie en fonction d'un angle relatif entre les deux sous-ensembles (1, 2) mobiles en rotation et que le degré de variation de la longueur varie en fonction de l'angle relatif.

6. Procédé selon la revendication 5, ***caractérisé en ce que*** le degré de variation de la longueur est faible, et de préférence approximativement égal à 0, lorsque l'angle relatif, partant d'une position de repos, est faible.

7. Procédé selon la revendication 5 ou 6, ***caractérisé en ce que*** le degré de variation de la longueur augmente à mesure qu'augmente l'angle relatif.

8. Procédé selon l'une quelconque des revendications 1 à 7, ***caractérisé en ce que*** les deux sous-ensembles (1, 2) mobiles en rotation l'un par rapport à l'autre interagissent par l'intermédiaire d'au moins un élément élastique (31) de l'organe de couplage (3) du fait que l'élément élastique (31) est comprimé en fonction d'un angle relatif entre les deux sous-ensembles (1, 2) mobiles en rotation et que le degré de compression varie en fonction de l'angle relatif.

9. Procédé selon la revendication 8, ***caractérisé en ce que*** le degré de compression est faible, et de préférence approximativement égal à 0, lorsque l'angle relatif, partant d'une position de repos, est faible.

10. Procédé selon la revendication 9, ***caractérisé en ce que*** le degré de compression augmente à mesure qu'augmente l'angle relatif.

11. Amortisseur de vibrations de torsion dans lequel deux sous-ensembles (1, 2) montés mobiles en rotation l'un par rapport à l'autre sont réunis par couplage par l'intermédiaire d'au moins un organe de couplage (3) qui s'oppose à un mouvement relatif entre les deux sous-ensembles (1, 2) mobiles en rotation par le fait que lors d'un mouvement relatif entre les deux sous-ensembles l'un de deux poussoirs (30) de l'organe de couplage (3) se déplace par rapport au deuxième sous-ensemble alors que l'autre des deux poussoirs reste en appui contre une surface d'appui (20) du deuxième sous-ensemble, ***caractérisé en ce qu'***au moins un des deux poussoirs de l'organe de couplage (3) est guidé de telle sorte qu'il est déplacé par rapport au premier sous-ensemble (1) en fonction d'un angle relatif entre les deux sous-ensembles (1, 2) alors qu'il agit avec une force de rappel sur un premier sous-ensemble (1) des deux sous-ensembles (1, 2), ledit poussoir comportant, en termes de guidage, au moins une position de repos et une position de translation, et étant en appui contre la surface d'appui (20) du deuxième sous-ensemble (2) en position de repos et se trouvant, en position de translation par rapport à sa position de repos, basculé par rapport au deuxième sous-ensemble (2).

12. Amortisseur de vibrations de torsion selon la revendication 11, ***caractérisé en ce que*** l'organe de couplage (3) comporte deux poussoirs (30) qui sont sollicités en rapprochement l'un de l'autre lors d'un certain mouvement relatif entre les deux sous-ensembles, les poussoirs se chevauchant à un certain angle relatif.

13. Amortisseur de vibrations de torsion selon la revendication 11 ou 12, ***caractérisé en ce que*** l'organe de couplage (3) comprend deux poussoirs (30), les deux poussoirs (30) comportant une surface de retenue latérale (40) pour un élément ressort (31) disposé entre les poussoirs (30), chacune de ces surfaces de retenue pouvant s'engager dans un évidement (41) correspondant pratiqué dans l'autre des deux poussoirs (30) respectivement.

14. Amortisseur de vibrations de torsion selon l'une quelconque des revendications 11 à 13, ***caractérisé en ce que*** l'organe de couplage (3) comprend deux poussoirs (30) et que les deux poussoirs (30) comportent une surface de retenue extérieure (42) pour un élément ressort (31) disposé entre les poussoirs (30), une surface d'arrêt en pente (43) étant prévue dans la région axialement extérieure de cette surface de retenue.

15. Amortisseur de vibrations de torsion selon la revendication 14, ***caractérisé en ce qu'***une surface de guidage (44) destinée à venir en appui contre l'un des sous-ensembles (2) mobiles en rotation est prévue axialement à côté de la surface d'arrêt en pente (43).

16. Amortisseur de vibrations de torsion selon l'une quelconque des revendications 11 à 15, ***caractérisé en ce que*** l'organe de couplage (3) comporte deux poussoirs (30) qui comportent au moins une position de réception et une position rentrée par rapport à l'un des deux sous-ensembles mobiles en rotation.

17. Amortisseur de vibrations de torsion selon la revendication 16, ***caractérisé en ce que*** les poussoirs (30), en position rentrée, sont basculés radialement vers l'intérieur par rapport à l'autre poussoir (30).

18. Amortisseur de vibrations de torsion selon la revendication 16 ou 17, ***caractérisé en ce que*** les poussoirs (30), en position rentrée, sont contraints et guidés par les deux sous-ensembles (1, 2) mobiles en rotation.

19. Amortisseur de vibrations de torsion selon l'une quelconque des revendications 16 à 18, ***caractérisé par*** des moyens qui bloquent un premier des deux poussoirs (30) dans sa position de réception lorsque le deuxième des deux poussoirs (30) adopte sa position rentrée.

20. Amortisseur de vibrations de torsion selon la revendication 19, ***caractérisé en ce que*** les moyens de fixation comprennent un élément ressort, de préférence un élément ressort (31) de l'organe de couplage (3).

21. Amortisseur de vibrations de torsion selon l'une quelconque des revendications 16 à 20, ***caractérisé par*** des moyens limiteurs qui forment, du moins lorsqu'un premier des deux poussoirs (30) commence à se déplacer vers sa position rentrée, une butée (45) dans le deuxième des deux poussoirs (30), cette butée empêchant le deuxième des deux poussoirs (30) de quitter sa position de réception.

22. Amortisseur de vibrations de torsion selon l'une quelconque des revendications 11 à 21, ***caractérisé en ce que*** l'organe de couplage (3) comprend deux poussoirs (30) sensiblement identiques situés en regard l'un de l'autre.

23. Amortisseur de vibrations de torsion selon l'une quelconque des revendications 11 à 22, ***caractérisé en ce que*** les poussoirs (30) sont conformés de manière asymétrique par rapport à un plan radial de l'amortisseur de vibrations de torsion.
